Europäisches Patentamt

European Patent Office

Office européen des brevets

(19)

(11) Publication number: **0 214 726 B1**

(12)    **EUROPEAN PATENT SPECIFICATION**

(45) Date of publication of patent specification: **11.09.91**    (51) Int. Cl.⁵: **H04H 5/00**

(21) Application number: **86305451.6**

(22) Date of filing: **16.07.86**

(54) **Automatic multi-system am stereo receiver using existing single-system am stereo decoder IC.**

(30) Priority: **28.08.85 US 770170**

(43) Date of publication of application:
**18.03.87 Bulletin 87/12**

(45) Publication of the grant of the patent:
**11.09.91 Bulletin 91/37**

(84) Designated Contracting States:
**DE FR GB IT NL**

(56) References cited:
**FR-A- 2 512 295**
**GB-A- 2 134 757**
**US-A- 4 535 470**

(73) Proprietor: **Kahn, Leonard Richard**
**137 East 36 Street**
**New York New York 10016(US)**

(72) Inventor: **Kahn, Leonard Richard**
**137 East 36 Street**
**New York New York 10016(US)**

(74) Representative: **Wood, Anthony Charles et al**
**Urquhart-Dykes & Lord 91 Wimpole Street**
**London W1M 8AH(GB)**

## Description

Unlike the case of color television broadcasting, where a single system (the NTSC system) was approved by the Federal Communications Commission (FCC) for use in the United States, the FCC did not establish a single-system standard when it authorized stereo AM broadcasting to begin in 1982. As a result, any system may be used by AM broadcasters so long as it meets certain minimum technical specifications which the FCC imposed. In fact initially four different systems were used by AM broadcasters. These were known as the Harris, Kahn/Hazeltine, Magnavox and Motorola systems. Since then, use of the Harris and Magnavox systems has been effectively discontinued, so that at the time of this writing only the Kahn/Hazeltine and Motorola systems remain in use in the United States. Hence, the need arose for a multi-system AM stereo receiver, which automatically recognizes and selects appropriate stereo signal decoding circuitry for the particular AM stereo system signal being received at the time. Such a receiver must also be compatible with conventional monophonic AM broadcasts. Furthermore, such receivers should preferably be inexpensive, and for this purpose preferably make use of existing integrated circuits (IC's), instead of requiring the development of new custom IC's in order to achieve this purpose.

It is, therefore, an object of the present invention to provide a multi-system AM stereo receiver which is compatible with monophonic AM broadcasts, and which is capable of receiving and properly decoding AM stereo broadcasts using the Kahn/Hazeltine and Motorola systems, but which does so automatically and using existing IC's.

FR-A-2512295 describes an AM stereo receiver capable of receiving signals representative of at least first and second different types of AM stereo systems, said first and second types requiring different amounts of inverse amplitude modulation for proper reception; said receiver comprising:

receiving means for receiving AM radio frequency signals and for converting said signals to corresponding intermediate frequency (IF) signals;

decoding means for decoding said IF signals to develop a pair of left (L) and right (R) stereo audio signals appropriate to the type of AM stereo signal currently being received by the receiving means; and

coupling means for coupling the appropriate pair to left (L) and right (R) audio outputs of said stereo receiver.

That receiver includes circuitry which is used in various configurations to demodulate the stereo signal components from broadcast signals of any one of two or more of the proposed AM stereo signal types.

US-A-4535470 also describes such an AM stereo receiver. A particular embodiment can be configured to demodulate the received signals of each of the five AM stereo signal types proposed at that time, only one system requiring switching if a distortion factor of approximately 5% and a degree of separation of approximately 20 dB can be tolerated for reception of the other four systems in an acceptable fashion.

The present invention is characterized in that:
said decoding means comprises:

first means including an integrated circuit (IC) stereo signal decoder designed to properly decode only received signals representing said first type of AM stereo system, said IC including means for inversely amplitude modulating said IF signals by an amount appropriate to said first type, to develop a first pair of left (L) and right (R) stereo audio signals from IF signals which represent said first type of AM stereo system;

second means, coupled to said IC, for adapting said first means so that said first and second means in combination develop a second pair of left (L) and right (R) stereo audio signals from IF signals which represent said second type of AM stereo system, said combination being effective to inversely amplitude modulate said IF signals by an amount appropriate to said second type of system; and

said coupling means is operable to select one or the other of said first and second pairs of left (L) and and right (R) stereo audio signals for coupling to said left and right audio outputs of said stereo receiver.

In another aspect the present invention is characterized in that:

said decoding means includes an integrated circuit (IC) stereo signal decoder designed to properly decode only received signals representing said first type of AM stereo system, said IC having a plurality of terminals including:

a first terminal at which the IC develops an output signal representative of the envelope of said IF signals;

a second terminal for receiving said IF signals as an input thereto;

a third terminal at which the IC develops an output error signal (X);

a fourth terminal at which the IC develops an output signal representative of left (L) stereo information;

a fifth terminal at which the IC develops an output signal representative of right (R) stereo information;

a sixth terminal at which the IC develops an output signal representative of any low frequency phase modulation, below about 30Hz, in IF signals applied to said second terminal;

a seventh terminal for supplying a signal indicating the presence in said IF signals of a pilot tone of said first type of AM stereo system; and

an eighth terminal at which the IC develops an output signal representative of quadrature phase components in said IF signals;

means coupled to said third terminal for disabling said error signal (X);

means coupled to said first and eighth terminals for shifting the phase of the signals present at said terminals so as to have a relative phase difference of approximately 90° over at least a selected portion of the frequency band they occupy;

means for combining said phase shifted signals to produce a pair of audio frequency output signals representative of (L) and (R) information in said IF signals;

means coupled to said sixth terminal for detecting and indicating the presence of a low frequency tone of about 15Hz in said IF signals which represents the presence of AM stereo signals of said second type in said IF signals;

said coupling means is coupled to said detecting and indicating means, for disabling the output of said combining means except when said 15Hz tone is detected;

means coupled to said fourth and fifth terminals and to said detection and indicating means, for disabling the signals present at said terminals when said 15Hz tone is detected;

means coupled to said source of IF signals, and to said first terminal, for inversely amplitude modulating said IF signals in accordance with a selected function of the output signal appearing at said first terminal; and

means coupled to said first terminal and to said inverse amplitude modulating means, and to said seventh terminal, for disabling the output of said inverse amplitude modulating means when a pilot signal of said first AM stereo system is detected.

For a better understanding of the present invention, together with other and further objects, reference is made to the following description, taken in conjunction with the accompanying drawings, and its scope will be pointed out in the appended claims.

Fig. 1 is a block diagram of a compatible multi-system AM stereo receiver which embodies the present invention in one form.

Fig. 2 is block diagram showing a modification of the embodiment of Fig. 1.

Fig. 3 is a block diagram of another embodiment of the invention.

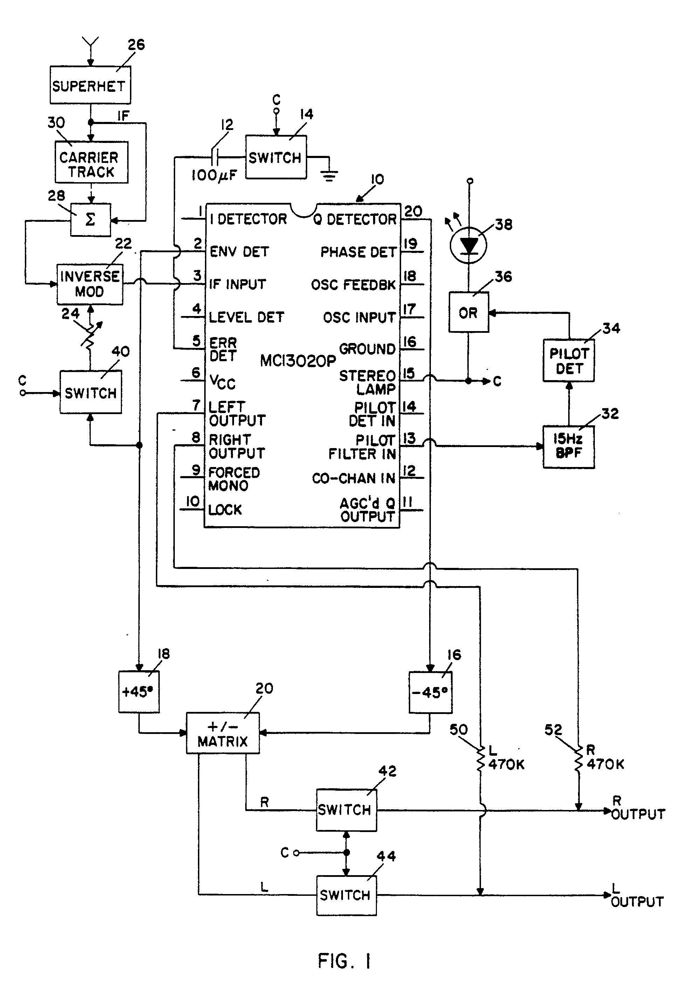

The embodiment shown in Fig. 1 makes novel use of an existing commercially available IC known as the MC13020P which is manufactured by the Motorola Corporation. It has been publically announced by Motorola, however, that at least two other companies have been licensed to manufacture this IC. It is understood that a variant of this IC is manufactured by Motorola specially for the General Motors Corporation and bears Delco Part No. DM-235. Although the description of the invention set forth herein refers specifically to the Motorola MC13020P, it will be readily apparent to those skilled in the art that equivalent AM stereo decoder IC's may be substituted, such as the Delco part identified above.

The Motorola IC is intended to be used in an AM stereo receiver to properly decode in stereo only AM stereo signals which were broadcast using the Motorola compatible quadrature system of AM stereo transmission. However, as is more fully described hereinafter, by adding a few external circuit components to the IC, the receiver can be adapted into one which is capable of also properly decoding AM stereo signals which are broadcast using the Kahn/Hazeltine Independent Sideband system of AM stereo transmission. Thus, the present invention enables a so-called "single-system" (Motorola) AM stereo receiver, having limited utility, to be readily converted into a so-called "multi-system" (Motorola and Kahn/Hazeltine) AM stereo receiver having greater utility, since presently both AM stereo systems are in use in the United States by AM radio stations.

Motorola IC MC13020P, denoted in the drawings with the reference numeral 10, is fully described in Motorola Semiconductors' published leaflet #ADI-725, which is incorporated herein by reference. This leaflet also shows the components required external to the IC for operation of the IC as a Motorola AM stereo system decoder. Unless noted herein, those components remain unaffected by the present invention and, for purposes of clarity, are not shown in the drawings. Although the IC has a total of 20 terminals, only 8 of these are affected by the present invention.
These are:

terminal 2, identified by Motorola as the envelope detector output, hereinafter sometimes referred to as the "first terminal";

terminal 3, identified as the IF input, hereinafter sometimes referred to as the "second terminal";

terminal 5, identified as the error amplifier output, hereinafter sometimes referred to as the "third terminal";

terminal 7, identified as the left or (L) output, hereinafter sometimes referred to as the "fourth terminal";

terminal 8, identified as the right or (R) output, hereinafter sometimes referred to as the "fifth terminal";

terminal 13, identified as the pilot filter input, hereinafter sometimes referred to as the "sixth terminal";

terminal 15, identified as the stereo lamp control output, hereinafter sometimes referred to as the "seventh terminal"; and

terminal 20, identified as the Q or quadrature detector output, hereinafter sometimes referred to as the "eighth terminal".

In the embodiment of the present invention shown in Fig. 1, error signal disabling means, for example in the form of a capacitor 12 in series with a normally closed electronic switch 14, is connected between terminal 5, the "third terminal", and ground, so that any error signal which may appear at this terminal is suppressed or "killed". Phase shifting means, in the form of a phase angle advancing network 18 for example, advances the phase of signals applied to it by approximately 45° (actually delaying them by 315°) over at least a portion of the audio frequency band of the receiver and is connected to terminal 2, the "first terminal", on which a signal representing (L + R) information appears. Similarly, a 45° phase angle delay network 16 is connected to terminal 20, the "eighth terminal", on which a signal representing (L-R) information appears.

In the Kahn/Hazeltine AM stereo system, at the transmitter (L + R) and (L-R) information is placed substantially in quadrature. Then, the (L-R) signal is used to phase modulate a carrier and the (L + R) signal is used to amplitude modulate the phase-modulated carrier in one embodiment. Phase shift networks 18 and 16 in the receiver of Fig. 1 are intended to complement this process so that the resulting phase shifted (L + R) and (L-R) signals, respectively, which are applied to a conventional sum and difference matrix 20 will be in the proper phase relationship to develop L and R representative audio signals at the outputs of the matrix.

In receivers for the Kahn/Hazeltine and Motorola systems the amplitude modulation in the intermediate frequency (IF) signal is reduced by a selected amount prior to demodulation in a synchronous quadrature demodulator in order to reduce distortion which would otherwise occur in the resulting (L-R) representative audio signal that is developed at the output of the quadrature demodulator. This distortion reduction technique, sometimes refered to as inverse amplitude modulation, is described more fully in U.S. Patent No. 4,018,994. However, different amounts of inverse amplitude modulation are required for the two different AM stereo systems. Circuitry is provided within the Motorola IC to produce the necessary amount of reduction in the amplitude modulation of a Motorola AM stereo IF signal before it is applied to a quadrature demodulator so as to achieve distortion reduction. Since components associated with this circuitry are not accessible from outside the IC, in the embodiment of Fig. 1 external components are added in accordance with the present invention to produce the desired amount of reduction in the amplitude modulation of a Kahn/Hazeltine AM stereo IF signal before it is applied to the quadrature demodulator so as to achieve distortion reduction. The reduction in amplitude modulation is accomplished in a separate inverse modulator 22, which is controlled by the output of the envelope detector in the IC, which output appears on terminal 2, the "first terminal". The amount of inverse modulation is adjustable by attenuation means, such as a variable resistor 24.

If desired, the AM stereo receiver may be adapted to use an IF signal which has had its carrier exalted. This is accomplished by carrier exalting means, implemented in Fig. 1, for example, by the combination of carrier recovery circuit 30, which may be a phase-locked loop, and an adder circuit 28. The IF signal with its carrier exalted is obtained at the output of the adder circuit 28, and may be fed therefrom to the inverse modulator 22 instead of the normal IF signal available at the output of superhetrodyne receiving circuit 26.

Since the multiple-system AM stereo decoder of Fig. 1 develops two different sets of (L) and (R) signals, a pair of electronic switches 42 and 44 is provided for the purpose of allowing the set of (L) and (R) signals available from matrix 20 to be coupled to the L and R outputs when a Kahn/Hazeltine AM stereo system broadcast is being received and decoded or, alternatively, at all times except when a Motorola system broadcast is being received and decoded. In addition, in the particular embodiment shown in Fig. 1, a pair of resistors 50 and 52 are used in series with the outputs from the fourth and fifth terminals of the IC to reduce the level of the (L) and (R) signals available from these terminals so as to match that of the (L) and (R) signals from switches 42 and 44, so that a difference in level is not heard when switching from a station broadcasting with the Kahn/Hazeltine system to one broadcasting with the Motorola system, or vice verse. Alternatively, if appropriate gain were provided in matrix 20 for its output (L) and (R) signals, resistors 50 and 52 could be deleted.

Since the receiver of Fig. 1 is capable of receiving either Kahn/Hazeltine or Motorola AM stereo system broadcasts, using different and alternative circuitry, additional circuitry must be provided to automatically switch the receiver's stereo decoding circuitry between its two different modes of operation, depending upon which of the two AM stereo systems is being received. Fortunately, each AM stereo broadcast signal contains a low frequency stereo pilot tone which identifies which AM stereo system it represents. AM stereo receivers must be able to recognize the different pilot tones, and upon recognition, switch to the appropriate stereo signal decoding mode. For the Kahn/Hazeltine system the pilot tone frequency is 15Hz, whereas the Motorola system uses 25Hz.

Switching between the two different modes of stereo operation is accomplished by providing a separate bandpass filter 32 and pilot detector 34 coupled to terminal 13 of the IC, or the "sixth" terminal. Bandpass filter 32 has a narrow passband centered at 15Hz for enabling pilot detector 34 to detect the Kahn/Hazeltine system pilot, thereby developing a control signal indicating reception of a Kahn/Hazeltine AM stereo system broadcast. The Motorola IC includes a pilot detector for the 25Hz Motorola AM stereo system pilot tone. When a 25Hz tone is detected, a signal appears on terminal 15, the "seventh" terminal. This signal is coupled to one input of an OR circuit 36, the other input of which is fed by the output of the Kahn/Hazeltine pilot tone detector 34. The output of the CR circuit 36 is coupled to an indicator, such as an LED (light emitting diode) 38, which serves to indicate to a user that an AM stereo signal is being received but does not identify the type of AM stereo system being used.

When a Motorola AM stereo system signal is being received, the Kahn/Hazeltine system related circuits should be disabled. This is accomplished by the signal appearing at the "seventh terminal" being fed firstly to electronic switch 14, disabling the error signal killing circuit 12; secondly to electronic switch 40, disabling the inverse modulator 22; and thirdly to the pair of electronic switches 42 and 44, opening them so that the (L) and (R) outputs of matrix circuit 20 are not coupled to the (L) and (R) outputs of the receiver. In this case the (L) and (R) outputs from the Motorola IC are the (L) and (R) outputs of the receiver.

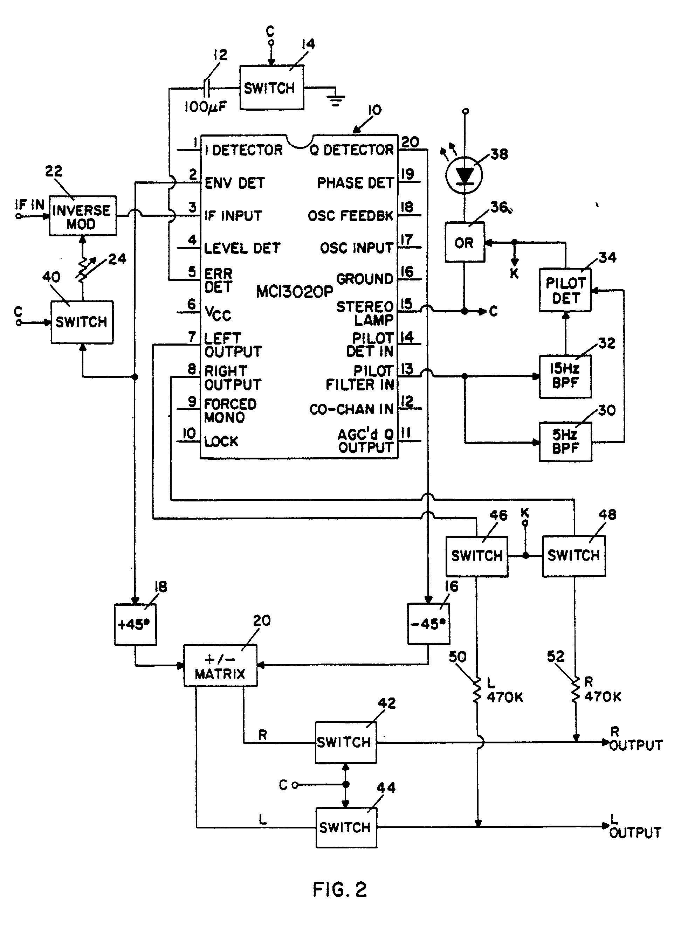

Conversely, when a Kahn/Hazeltine AM stereo signal is received, it is assumed that no (L) and (R) signals exist at the "fourth and fifth" terminals of the Motorola IC. In this case switches 14, 40, 42 and 44 are all closed and the (L) and (R) signals from matrix 20 are passed to the (L) and (R) outputs of the receiver. In the drawing shown, all terminals labelled "C" are interconnected for this purpose. If interfering signals are found to exist at the "fourth and fifth" terminals of the IC during reception of Kahn/Hazeltine system broadcasts, an additional pair of electronic switches 46 and 48 may be added as shown in Fig. 2. Switches 46 and 48 are arranged so as to pass signals from the "fourth and fifth" terminals of the Motorola IC to the (L) and (R) outputs of the receiver only when the "seventh" terminal indicates that a Motorola AM stereo system broadcast is being received.

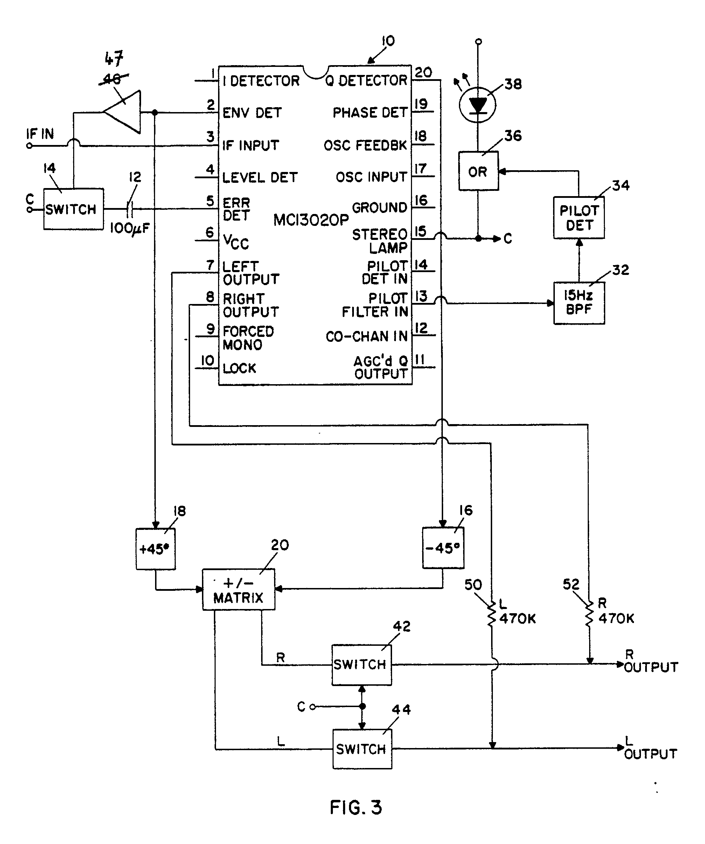

In an alternative embodiment of the invention shown in Fig. 3, the error signal disabling or killing circuit is implemented in the novel manner shown. As in the embodiment of Fig. 1, the output from the "third terminal", terminal 5 of the IC, on which an error signal appears, is coupled to one terminal of a 100 μF capacitor 12, the other terminal of the 100 μF capacitor 12 being connected to the output of an electronic switch 14, whose input is connected to the output of a low output impedance operational amplifier 47. The input of the operational amplifier 47 is connected to the "first terminal", namely terminal 2 of the IC, at which the output of the envelope detector normally appears. In this embodiment, the low output impedance of the operational amplifier 47 effectively suppresses or kills and error signal present at terminal 5 (generated within the IC) and, at the same time, also controls the inverse modulation process which occurs within the IC, so that no additional inverse modulator is required external to the IC.

## Claims

1. An AM stereo receiver capable of receiving signals representative of at least first and second different types of AM stereo systems, said first and second types requiring different amounts of inverse amplitude modulation for proper reception; said receiver comprising:

    receiving means (26) for receiving AM radio frequency signals and for converting said signals to corresponding intermediate frequency (IF) signals;

    decoding means (10,22,47) for decoding said IF signals to develop a pair of left (L) and right (R) stereo audio signals appropriate to the type of AM stereo signal currently being received by the receiving means; and

    coupling means (42,44) for coupling the appropriate pair to left (L) and right (R) audio outputs of said stereo receiver;

    said decoding means (10,22,47) comprises:

    first means (10) including an integrated circuit (IC) stereo signal decoder (10) designed to properly decode only received signals representing said first type of AM stereo system, said IC including means for inversely amplitude modulating said IF signals by an amount appropriate to said first type, to develop a first pair of left (L) and right (R) stereo audio signals from IF signals which represent said first type of AM stereo system;

    and characterized in that it further comprises

    second means (22,47), coupled to said IC, for adapting said first means (10) so that said first and second means in combination develop a second pair of left (L) and right (R) stereo audio signals from IF signals which represent said second type of AM stereo system, said combination being effective to inversely amplitude modulate said IF signals by an amount appropriate to said second type of system; and

said coupling means (42,44) is operable to select one or the other of said first and second pairs of left (L) and right (R) stereo audio signals for coupling to said left and right audio outputs of said stereo receiver.

2. An AM stereo receiver according to claim 1 characterized in that the combination of said first means (10) and said second means (22,47) properly decodes received IF signals representing said second type of AM stereo system.

3. An AM stereo receiver according to claim 1 or claim 2 characterized in that said first means (10) includes a detector for a pilot signal component which is uniquely associated with received signals representing said first type of AM stereo system, and in that said second means (22,47) includes means (32,34,36) for adapting said pilot signal detector so as to also detect a pilot signal component which is uniquely associated with received signals representing said second type of AM stereo system.

4. An AM stereo receiver according to any one of claims 1 to 3 characterized in that said second means (22) includes an inverse amplitude modulator (22) for inversely amplitude modulating said received IF signals prior to their being supplied to said IC when said received signals represent said second type of AM stereo system.

5. An AM stereo receiver capable of receiving signals representative of at least first and second different types of AM stereo systems, said first and second types requiring different amounts of inverse amplitude modulation for proper reception; said receiver comprising:

receiving means (26) for receiving AM radio frequency signals and for converting said signals to corresponding intermediate frequency (IF) signals;

decoding means (10,22) for decoding said IF signals to develop a pair of left (L) and right (R) stereo audio signals appropriate to the type of AM stereo signal currently being received by the receiving means; and

coupling means (42,44) for coupling the appropriate pair to left (L) and right (R) audio outputs of said stereo receiver;

said decoding means (10,22) includes an integrated circuit (IC) stereo signal decoder (10) designed to properly decode only received signals representing said first type of AM stereo system, said IC having a plurality of terminals including:

a first terminal (10-2) at which the IC develops an output signal representative of the envelope of said IF signals;

a second terminal (10-3) for receiving said IF signals as an input thereto;

a third terminal (10-5) at which the IC develops an output error signal (X);

a fourth terminal (10-7) at which the IC develops an output signal representative of left (L) stereo information;

a fifth terminal (10-8) at which the IC develops an output signal representative of right (R) stereo information;

a sixth terminal (10-13) at which the IC develops an output signal representative of any low frequency phase modulation, below about 30Hz, in IF signals applied to said second terminal;

a seventh terminal (10-15) for supplying a signal indicating the presence in said IF signals of a pilot tone of said first type of AM stereo system; and

an eighth terminal (10-20) at which the IC develops an output signal representative of quadrature phase components in said IF signals;

characterized in that it further includes :

means (12, 14) coupled to said third terminal for disabling said error signal (X);

means (16, 18) coupled to said first and eighth terminals for shifting the phase of the signals present at said terminals so as to have a relative phase difference of approximately 90° over at least a selected portion of the frequency band they occupy;

means (20) for combining said phase shifted signals to produce a pair of audio frequency output signals representative of (L) and (R) information in said IF signals;

means (32,34,36,38) coupled to said sixth terminal for detecting and indicating the presence of a low frequency tone of about 15Hz in said IF signals which represents the presence of AM stereo signals of said second type in said IF signals;

said coupling means (42,44) is coupled to said detecting and indicating means, for disabling the output of said combining means (20) except when said 15Hz tone is detected;

means (46,48) coupled to said fourth and fifth terminals and to said detection and indicating means, for disabling the signals present at said terminals when said 15Hz tone is detected;

means (22,24) coupled to said source of IF signals, and to said first terminal, for inversely amplitude modulating said IF signals in accordance with a selected function of the output signal appearing at said first terminal; and

means (40) coupled to said first terminal and to said inverse amplitude modulating means (22,24), and to said seventh terminal, for disabling the output of said inverse amplitude modulating means when a pilot signal of said first AM stereo system is detected.

## Revendications

1. Un récepteur stéréophonique à modulation d'amplitude capable de recevoir des signaux représentatifs d'au moins un premier type et un second type différents de signaux stéréophoniques à modulation d'amplitude, les premier et second types exigeant des niveaux différents de modulation d'amplitude inverse pour permettre une réception correcte ; ce récepteur comprenant :

des moyens de réception (26) qui sont destinés à recevoir des signaux radiofréquence et à convertir ces signaux en signaux à fréquence intermédiaire (FI) correspondants ;

des moyens de décodage (10, 22, 47) qui sont destinés à décoder les signaux FI pour élaborer une paire de signaux audio stéréophoniques gauche (L) et droit (R), appropriés au type de signal stéréophonique à modulation d'amplitude que les moyens de réception reçoivent au moment présent ; et

des moyens de connexion (42, 44) pour appliquer la paire appropriée aux sorties audio gauche (L) et droite (R) du récepteur stéréophonique ;

les moyens de décodage (10, 22, 47) comprenant :

des premiers moyens (10) comprenant un décodeur de signal stéréophonique à circuit intégré (CI) (10) conçu pour décoder correctement seulement des signaux reçus qui représentent le premier type de système stéréophonique à modulation d'amplitude, ce CI comprenant des moyens pour effectuer une modulation d'amplitude inverse des signaux FI, avec un niveau approprié au premier type, afin d'élaborer une première paire de signaux audio stéréophoniques gauche (L) et droit (R) à partir de signaux FI qui représentent le premier type de système stéréophonique à modulation d'amplitude ;

et caractérisé en ce qu'il comprend en outre :

des seconds moyens (22, 47), connectés au CI, pour adapter les premiers moyens (10) de façon que les premiers et seconds moyens, en combinaison, élaborent une seconde paire de signaux audio stéréophoniques gauche (L) et droit (R), à partir de signaux FI qui représentent le second type de système stéréophonique à modulation d'amplitude, cette combinaison effectuant une modulation d'amplitude inverse des signaux FI avec un niveau approprié au second type de système ; et

les moyens de connexion (42, 44) pouvant être actionnés de façon à sélectionner l'une ou l'autre des première et seconde paires de signaux audio stéréophoniques gauche (L) et droit (R), pour l'application aux sorties audio gauche et droite du récepteur stéréophonique.

2. Un récepteur stéréophonique à modulation d'amplitude selon la revendication 1, caractérisé en ce que la combinaison des premiers moyens (10) et des seconds moyens (22, 47) décode correctement des signaux FI reçus représentant le second type de système stéréophonique à modulation d'amplitude.

3. Un récepteur stéréophonique à modulation d'amplitude selon la revendication 1 ou la revendication 2, caractérisé en ce que les premiers moyens (10) comprennent un détecteur pour une composante de signal pilote qui est associée de façon spécifique à des signaux reçus représentant le premier type de système stéréophonique à modulation d'amplitude, et en ce que les seconds moyens (22, 47) comprennent des moyens (32, 34, 36) qui sont conçus pour adapter le détecteur de signal pilote pour détecter également une composante de signal pilote qui est associée de façon spécifique à des signaux reçus représentant le second type de système stéréophonique à modulation d'amplitude.

4. Un récepteur stéréophonique à modulation d'amplitude selon l'une quelconque des revendications 1 à 3, caractérisé en ce que les seconds moyens (22) comprennent un modulateur d'amplitude inverse (22) conçu pour effectuer une modulation d'amplitude inverse des signaux FI reçus, avant que ceux-ci ne soient appliqués au CI, lorsque le signaux reçus représentent le second type de système stéréophonique à modulation d'amplitude.

5. Un récepteur stéréophonique à modulation d'amplitude capable de recevoir des signaux représentatifs d'au moins un premier type et un second type différents de systèmes stéréophoniques à modulation d'amplitude, ces premier et second types exigeant des niveaux différents de modulation d'amplitude inverse pour permettre une réception correcte ; ce récepteur comprenant :

des moyens de réception (26) qui sont destinés à recevoir des signaux radiofréquence à modulation d'amplitude et à convertir ces signaux en signaux à fréquence intermédiaire (FI) correspondants ;

des moyens de décodage (10, 22) qui sont destinés à décoder les signaux FI pour élaborer une paire de signaux audio stéréophoniques gauche (L) et droit (R) appropriés au type de signal stéréophonique à modulation d'amplitude que les moyens de réception reçoivent au moment présent ; et

des moyens de connexion (42, 44) pour appliquer la paire appropriée à des sorties audio gauche (L) et droite (R) du récepteur stéréophonique ;

les moyens de décodage (10, 22) comprenant un décodeur de signal stéréophonique à circuit intégré (CI) (10) qui est conçu pour décoder correctement seulement des signaux reçus qui représentent le premier type de système stéréophonique à modulation d'amplitude, ce CI ayant un ensemble de bornes qui comprend :

une première borne (10-2) sur laquelle le CI produit un signal de sortie représentatif de l'enveloppe des signaux FI ;

une seconde borne (10-3) pour recevoir les signaux FI à titre de signal d'entrée ;

une troisième borne (10-5) sur laquelle le CI produit un signal d'erreur de sortie (X) ;

une quatrième borne (10-7) sur laquelle le CI produit un signal de sortie représentatif de l'information stéréophonique gauche (L) ;

une cinquième borne (10-8) sur laquelle le CI produit un signal de sortie représentatif de l'information stéréophonique droite (R) ;

une sixième borne (10-13) sur laquelle le CI produit un signal de sortie représentatif de toute modulation de phase de basse fréquence, au-dessous d'environ 30 Hz, présente dans des signaux FI qui sont appliqués à la seconde borne ;

une septième borne (10-15) pour fournir un signal indiquant la présence dans les signaux FI d'une tonalité pilote du premier type de système stéréophonique à modulation d'amplitude ; et

une huitième borne (10-20) sur laquelle le CI produit un signal de sortie représentatif de composantes en quadrature de phase dans les signaux FI ;

caractérisé en ce qu'il comprend en outre :

des moyens (12, 14) qui sont connectés à la troisième borne pour invalider le signal d'erreur (X) ;

des moyens (16, 18) qui sont connectés aux première et huitième bornes pour déphaser les signaux présents sur ces bornes, de façon qu'ils présentent une différence de phase relative d'environ 90° sur au moins une partie sélectionnée de la bande de fréquence qu'ils occupent ;

des moyens (20) pour combiner les signaux déphasés de façon à produire une paire de signaux de sortie audiofréquence représentatifs de l'information gauche (L) et droite (R) dans les signaux FI ;

des moyens (32, 34, 36, 38) connectés à la sixième borne pour détecter et indiquer la présence d'une tonalité de basse fréquence, d'environ 15 Hz, dans les signaux FI, qui représente la présence de signaux stéréophoniques à modulation d'amplitude du second type dans ces signaux FI ;

les moyens de connexion (42, 44) étant connectés aux moyens de détection et d'indication, pour invalider le signal de sortie des moyens de combinaison (20), sauf lorsque la tonalité à 15 Hz est détectée ;

des moyens (46, 48) qui sont connectés aux quatrième et cinquième bornes et aux moyens de détection et d'indication, pour invalider les signaux qui sont présents sur ces bornes lorsque la tonalité à 15 Hz est détectée ;

des moyens (22, 24) qui sont connectés à la source de signaux FI, et à la première borne, pour effectuer une modulation d'amplitude inverse des signaux FI, conformément à une fonction sélectionnée du signal de sortie qui apparaît sur la première borne ; et

des moyens (40) connectés à la première borne et aux moyens de modulation d'amplitude inverse (22, 24), ainsi qu'à la septième borne, pour mettre hors fonction la sortie des moyens de modulation d'amplitude inverse lorsqu'un signal pilote du premier système stéréophonique à modulation d'amplitude est détecté.

**Patentansprüche**

1. AM-Stereoempfänger zum Empfang von zu zumindest einer ersten und einer davon unterschiedlichen zweiten AM-Stereosystemart gehörenden Signalen, wobei zum einwandfreien Empfang die erste und die zweite Art einen unterschiedlichen Grad der inversen Amplitudenmodulation erfordern, mit

Empfangsmitteln (26) zum Empfang von AM-Radiofrequenzsignalen und zum Umwandeln dieser Signale in entsprechende Zwischenfrequenzsignale (IF);

mit Decodiereinrichtungen (10, 22, 47) zum Decodieren der ZF-Signale, um entsprechend der Art des durch die Empfangsmittel jeweils gerade empfangenen AM-Stereosignals ein Signalpaar bestehend aus einem linken (L) und einem rechten (R) Audio-Stereosignal zu erzeugen; und

mit Koppelmitteln (42, 44) zum Einspeisen des entsprechenden Signalpaares in einen linken (L) und ei-nen rechten (R) Audio-Ausgang des Stereoempfängers;

wobei die Decodiermittel (10, 22, 47) enthalten:

erste Mittel (10), die einen als integrierten Schaltkreis (IC) ausgeführten Sterosignaldecoder (10) umfassen, der so gestaltet ist, daß er lediglich die zu der ersten AM-Stereosystemart gehörenden empfangenen Signale richtig decodiert, und der Mittel enthält, um die Amplitude der ZF-Signale mit einem Modulationsgrad entsprechend der ersten AM-Stereosystemart invers zu modulieren, um ein erstes Signalpaar aus einem linken (L) und einem rechten (R) Audio-Stereosignal aus den ZF-Signalen zu erzeugen, die zu der ersten AM-Stereosystemart gehören, dadurch gekennzeichnet, daß außerdem enthalten sind:

mit dem integrierten Schaltkreis (IC) zusammengeschaltete zweite Mittel (22, 47) zum Anpassen der ersten Mittel (10), damit die ersten und zweiten Mittel gemeinsam ein zweites Signalpaar aus einem linken (L) und einem rechten (R) Audio-Stereosignal aus ZF-Signalen erzeugen, die zu der zweiten AM-Stereosystemart gehören, wobei die Zusammenschaltung dazu dient, die Amplitude der ZF-Signale mit einem Modulationsgrad invers zu modulieren, der der zweiten AM-Stereosystemart entspricht; und

daß die Koppelmittel (42, 44) dazu dienen, das eine oder das andere bzw. das erste oder das zweite Signalpaar aus einem linken (L) und einem rechten (R) Stereo-Audio-Signal zum Einspeisen in den linken und den rechten Audio-Ausgang des Stereoempfängers auszuwählen.

2. AM-Stereoempfänger nach Anspruch 1, dadurch gekennzeichnet, daß die Zusammenschaltung der ersten Mittel (10) und der zweiten Mittel (22, 47) richtig die empfangenen ZF-Signale, die zu der zweiten AM-Stereosystemart gehören, decodiert.

3. AM-Stereoempfänger nach Anspruch 1 oder 2, dadurch gekennzeichnet, daß die ersten Mittel (10) einen Detektor für eine Pilotsignalkomponente umfassen, die eineindeutig den empfangenen, zu der ersten AM-Stereosystemart gehörenden Signalen zugeordnet ist, und daß die zweiten Mittel (22, 47) Mittel (32, 34, 36) beinhalten, um den Pilotsignaldetektor anzupassen, damit er auch eine Pilotsignalkomponente erkennt, die eineindeutig den empfangenen, zu der zweiten AM-Stereosystemart gehörenden Signalen zugeordnet ist.

4. AM-Stereoempfänger nach einem der Ansprüche 1 bis 3, dadurch gekennzeichnet, daß die zweiten Mittel (22) einen Inversamplitudenmodulator (22) enthalten, um die Amplitude der empfangenen ZF-Signale invers zu modulieren, ehe sie dem integrierten Schaltkreis (IC) zugeführt werden, wenn die empfangenen Signale zu der zweiten AM-Stereosystemart gehören.

5. AM-Stereoempfänger zum Empfang von zu zumindest einer ersten und einer davon unterschiedlichen zweiten AM-Stereosystemart gehörenden Signalen, wobei zum einwandfreien Empfang die erste und die zweite Art einen unterschiedlichen Grad der inversen Amplitudenmodulation erfordern,

mit Empfangsmitteln (26) zum Empfang von AM-Radiofrequenzsignalen und zum Umwandlen dieser Signale in entsprechende Zwischenfrequenzsignale (IF);

mit Decodiereinrichtungen (10, 22, 47) zum Decodieren der ZF-Signale, um entsprechend der Art des durch die Empfangsmittel jeweils gerade empfangenen AM-Stereosignals ein Signalpaar bestehend aus einem linken (L) und einem rechten (R) Audio-Stereosignal zu erzeugen; und

mit Koppelmitteln (42, 44) zum Einspeisen des entsprechenden Signalpaares in einen linken (L) und einen rechten (R) Audio-Ausgang des Stereoempfängers;

wobei die Decodiermittel (10, 22) einen als integrierten Schaltkreis (IC) ausgeführten Stereosignaldecoder (10) umfassen, der so gestaltet ist, daß er lediglich die zu der ersten AM-Stereosystemart gehörenden empfangenen Signale richtig decodiert, und der eine Anzahl von Anschlüssen aufweist:

einen ersten Anschluß (10-2), an dem der integrierte Schaltkreis ein Ausgangssignal entsprechend der Hüllkurve der ZF-Signale abgibt;

einen zweiten Anschluß (10-3) als Eingang zum Einspeisen der ZF-Signale;

einen dritten Anschluß (10-5), an dem der integrierte Schaltkreis ein Ausgangsfehlersignal (X) abgibt;

einen vierten Anschluß (10-7), an dem der integrierte Schaltkreis ein Ausgangssignal entsprechend der linken (L) Stereoinformation abgibt;

einen fünften Anschluß (10-8), an dem der integrierte Schaltkreis ein Ausgangssignal entsprechend der rechten (R) Stereoinformation abgibt;

einen sechsten Anschluß (10-13), an dem der integrierte Schaltkreis ein Ausgangssignal abgibt, das aus einer niederfrequenten Phasenmodulation von unter etwa 30 Hz der dem zweiten Anschluß zugeführten ZF-Signale gewonnen ist;

einen siebten Anschluß (10-15) zum Abgeben eines Signals, das das Vorhandensein eines zu der ersten AM-Stereosystemart gehörenden Pilotsignals in den ZF-Signalen anzeigt; und

einen achten Anschluß (10-20), an dem der integrierte Schaltkreis ein Ausgangssignal abgibt, das der Quadraturphasenkomponente in den ZF-Signalen entspricht;

dadurch gekennzeichnet, daß ferner vorhanden sind:

an den dritten Anschluß angeschlossene Mittel (12, 14) zum Sperren des Fehlersignals (X);

an den ersten und den achten Anschluß angeschaltete Mittel (16, 18) zum Drehen der Phase der an den Anschlüssen anstehenden Signale, um eine relative Phasendifferenz von näherungsweise 90° in zumindest einem ausgewählten Teil des von den Signalen belegten Frequenzbandes zu erzeugen;

Verknüpfungsmittel (20), um die in der Phase gedrehten Signale miteinander zu verknüpfen und ein Signalpaar von Audio-Frequenzausgangssignalen entsprechend der (L) und (R) Information der ZF-Signale zu erzeugen;

mit dem sechsten Anschluß verbundene Mittel (32, 34, 36, 38) zum Erkennen und Anzeigen eines Niederfrequenztones von etwa 15 Hz in den ZF-Signalen, der dem Vorliegen eines AM-Stereosignals der zweiten Art in den ZF-Signalen entspricht;

wobei an die erkennenden und anzeigenden Mittel die Koppelmittel (42, 44) angeschlossen sind, um den Ausgang der Verknüpfungsmittel (20) zu sperren, es sei denn, daß der 15 Hz Ton ermittelt wurde;

mit dem vierten und fünften Anschluß sowie den Erkennungs- und Anzeigemitteln verbundenen Mitteln (46, 48) zum Sperren der an diesen Anschlüssen auftretenden Signale, wenn der 15 Hz Ton festgestellt wurde;

mit der Quelle für ZF-Signale und dem ersten Anschluß verbundenen Mittel (22, 24) zum inversen Modulieren der Amplitude der ZF-Signale mit einer festgelegten Funktion der Ausgangssignale, die an dem ersten Anschluß anstehen und

mit dem ersten Anschluß sowie den Mitteln (22, 24) zur inversen Amplitudenmodulation (22, 24) und mit dem siebten Anschluß verbundene Mittel (40) zum Sperren des Ausgangs der Mittel für die inverse Amplitudenmodulation, wenn ein Pilotsignal der ersten AM-Stereosystemart festgestellt wurde.

FIG. I

FIG. 2

EP 0 214 726 B1

FIG. 3